# EUROPEAN PATENT SPECIFICATION

(11) **EP 2 538 571 B1**
(45) Date of publication and mention of the grant of the patent: **24.08.2016**
(21) Application number: 12004639.6
(22) Date of filing: 20.06.2012
(51) Int. Cl.: H04B 5/00, G06K 7/10

(54) **Detecting a presence of near field communications (nfc) devices**
Anwesenheitsdetektion von Nahfeldkommunikationsgeräten
Détection de la présence des dispositifs de communication sans fil à champ proche

(30) Priority: 21.06.2011 US 201161499489 P; 30.09.2011 US 201113249820
(43) Date of publication of application: 26.12.2012
(73) Proprietor: Broadcom Corporation, Irvine, CA 92617 (US)
(72) Inventor: Hall, Steven, Deane, 92024 Olivenhain, CA (US); Royston, Philip, Stewart, Speen, Newbury Berks, RG 14 1RQ (GB); Leung, Frederick, Mang-Hong, 94306 Palo Alto, CA (US); Ibrahim, Brima, 92653 Laguna Hills, CA (US); Fung, Thomas, 95035 Milpitas, CA (US)
(74) Representative: Jehle, Volker Armin

(56) References cited:
- US-A1- 2004 113 755
- US-A1- 2006 170 553
- US-A1- 2007 236 336
- US-A1- 2008 291 043
- US-B2- 6 905 074

## Description

### BACKGROUND

### Field of Invention

The invention relates to near field communications (NFC), and more specifically to detecting a presence of a NFC capable device.

### Related Art

Near field communication (NFC) devices are being integrated into mobile devices, such as smartphones for example, to facilitate the use of these mobile devices in conducting daily transactions. For example, instead of carrying numerous credit cards, the credit information provided by these credit cards can be loaded into a NFC device and stored therein to be used as needed. The NFC device is simply tapped to a credit card terminal to relay the credit information to it to complete a transaction. As another example, a ticket writing system, such as those used in bus and train terminals, may simply write ticket fare information onto the NFC device instead of providing a paper ticket to a passenger. The passenger simply taps the NFC device to a reader to ride the bus or the train without the use of the paper ticket.

Generally, NFC includes a polling mode of operation to establish a communication among NFC devices. A first conventional approach probes a magnetic field of a first conventional NFC device for a second NFC device in accordance with a predefined polling routine. In this first conventional approach, the first conventional NFC device generates the magnetic field without any information for a predetermined duration, typically referred to as a guard time, that is technology dependent. The first conventional NFC device then probes the magnetic field for a second NFC device of a first technology type, such as type A, type B, or type F to provide some examples, using a conventional polling command upon expiration of the guard time. The conventional polling command includes such a conventional request command, type A (REQA), a conventional request command, type B (REQB), or a conventional request command, type F (REQF). The first conventional NFC device then generates the magnetic field without any information for another guard time and probes the magnetic field for a second NFC device of a second technology type using the conventional polling command if no response is received from the second conventional NFC device. The first conventional approach is further described in "NFC Forum: NFC Activity Specification: Technical Specification, NFC Forum™ Activity 1.0 NFCForum-TS-Activity-1.0," published November 18, 2010, which is incorporated by reference herein in its entirety.

The guard time of the first conventional approach unnecessarily consumes power. Typically, the guard time is approximately 5 ms when probing for type A and type B NFC devices and may reach more than 20 ms when probing for type F NFC devices. Additionally, the first conventional NFC device may have to generate the magnetic field without any information for more than one guard time and probe the magnetic field using more than one polling command for certain technologies. For example, the first conventional approach typically polls for type A devices then for type B devices which is followed by type F devices. In this example, the first conventional NFC device generates the guard time for type A, B, and F devices and provides the REQA, REQB, and REQF commands to establish a communication with a type F NFC device.

A second conventional approach transmit detection pulses having substantially similar magnitudes to detect a presence of NFC devices. A first NFC device continuously provides the detection pulses until a change in the magnitude one of the detection pulses is detected. This change is indicative of a second NFC device being present within a magnetic field of the first NFC device. The second conventional approach is further described in United States Patent Appl. No.: US-A-20100015917.

Document US-A-20070236336 relates to presence detection in a RFID system.

However, this simple detection of pulse change is susceptible to changes in environment. For example, moving the first NFC device around the environment may cause the magnitudes of the one or more detection pulses to change. As another example, objects within the environment, such as metal objects or other non-NFC capable devices to provide some examples, entering into the magnetic field may cause the magnitudes of the one or more detection pulses to change. These changes may result from changes in the environment alone and, not from the second NFC becoming present within the magnetic field. Consequentially, the first NFC device may improperly determine that the second NFC device is present.

Thus, there is a need to detect a presence of another NFC device within a magnetic field that overcomes the shortcomings described above. Further aspects and advantages of the present invention will become apparent from the detailed description that follows.

### BRIEF SUMMARY OF THE INVENTION

The invention is described by the appended claims.

### BRIEF DESCRIPTION OF THE DRAWINGS/FIGURES

Embodiments of the invention are described with reference to the accompanying drawings. In the drawings, like reference numbers indicate identical or functionally similar elements. Additionally, the left most digit(s) of a reference number identifies the drawing in which the reference number first appears.
FIG. 1 illustrates a block diagram of a NFC environment according to an exemplary embodiment of the invention;
FIG. 2 illustrates a conventional detection mode of operation used by a first conventional NFC device to detect a presence of a second conventional NFC device;
FIG. 3A illustrates a detection signal used by a first NFC capable device to detect a presence of a second NFC capable device within its magnetic field according to an exemplary embodiment of the present invention.
FIG. 3B illustrates a first possible change in the detection signal used by the first NFC capable device to detect the presence of the second NFC capable device within its magnetic field according to an exemplary embodiment of the present invention;
FIG. 3C illustrates a second possible change in the detection signal used by the first NFC capable device to detect the presence of the second NFC capable device within its magnetic field according to an exemplary embodiment of the present invention;
FIG. 3D illustrates a third possible change in the detection signal used by the first NFC capable device to detect the presence of the second NFC capable device within its magnetic field according to an exemplary embodiment of the present invention;
FIG. 4 is a flowchart of exemplary operational steps for detecting the presence of a NFC capable device within a magnetic field according to an exemplary embodiment of the present invention;
FIG. 5 illustrates a block diagram of a NFC device that may be used to detect a presence of other NFC capable devices according to an exemplary embodiment of the invention; and
FIG. 6 illustrates a first possible change in the detection signal used by the first NFC capable device to detect that the second NFC capable device remains within its magnetic field according to an exemplary embodiment of the present invention.

The invention will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE INVENTION

The following Detailed Description refers to accompanying drawings to illustrate exemplary embodiments consistent with the invention. References in the Detailed Description to "one exemplary embodiment," "an exemplary embodiment," "an example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the spirit and scope of the invention. Therefore, the Detailed Description is not meant to limit the invention. Rather, the scope of the invention is defined only in accordance with the following claims.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

### AN EXEMPLARY NEAR FIELD COMMUNICATIONS (NFC) ENVIRONMENT

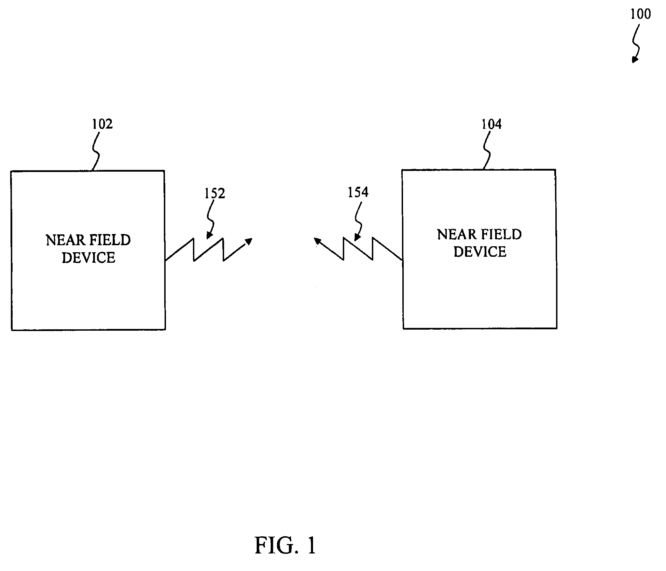

FIG. 1 illustrates a block diagram of a NFC environment according to an exemplary embodiment of the invention. A NFC environment 100 provides wireless communication of information, such as one or more commands and/or data, among a first NFC device 102 and a second NFC device 104 that are sufficiently proximate to each other. The first NFC device 102 and/or the second NFC device 104 may be implemented as a standalone or a discrete device or may be incorporated within or coupled to another electrical device or host device such as a mobile telephone, a portable computing device, another computing device such as a personal, a laptop, or a desktop computer, a computer peripheral such as a printer, a portable audio and/or video player, a payment system, a ticketing writing system such as a parking ticketing system, a bus ticketing system, a train ticketing system or an entrance ticketing system to provide some examples, or in a ticket reading system, a toy, a game, a poster, packaging, advertising material, a product inventory checking system and/or any other suitable electronic device that will be apparent to those skilled in the relevant art(s) without departing from the spirit and scope of the invention.

The first NFC device 102 detects a presence of the second NFC device 104 to enable communication of the information between the first NFC device 102 and the second NFC device 104. Typically, the first NFC device 102 observes its magnetic field for the presence of the second NFC device 104. The first NFC device 102 observes a change to its magnetic field upon entry of the second NFC device 104 into the magnetic field.

### CONVENTIONAL DETECTION MODE OF OPERATION

Conventionally, a first conventional NFC device operates in a conventional detection mode of operation to detect the presence of a second conventional NFC device. The first conventional NFC enters into a conventional polling mode of operation to establish communication with the second conventional NFC device upon detection of the second conventional NFC device.

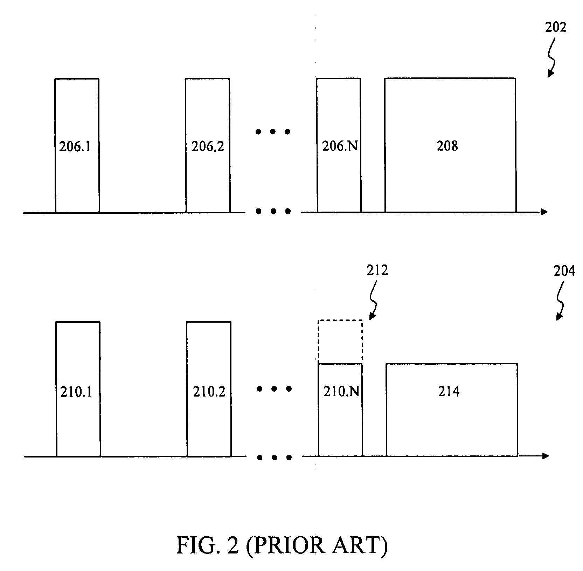

FIG. 2 illustrates a conventional detection mode of operation used by a first conventional NFC device to detect a presence of a second conventional NFC device. A first conventional NFC device provides conventional detection pulses having substantially similar magnitudes until a change in the magnitude one of the conventional detection pulses is detected. This change in the magnitude indicates a second conventional NFC device has entered into a magnetic field provided by the first conventional NFC device. Upon detection of the second conventional NFC device, the first conventional NFC enters into a conventional polling mode of operation to establish communication with the second conventional NFC device.

As illustrated by a graphical illustration 202, the first conventional NFC device provides one or more conventional detection pulses 206.1 through 206.N, each of the conventional detection pulses 206.1 through 206.N being characterized as having a substantially similar magnitude. For example, a magnitude of the conventional detection pulse 206.1 is substantially similar to a magnitude of the conventional detection pulse 206.2 which is substantially similar to a magnitude of the conventional detection pulse 206.N. As additionally illustrated by the graphical illustration 202, the first conventional NFC device enters into a conventional polling mode of operation 208 following the conventional detection pulse 206.N to establish communication with the second conventional NFC device. One example of the conventional polling mode of operation 208 is described in "NFC Forum: NFC Activity Specification: Technical Specification, NFC Forum™ Activity 1.0 NFCForum-TS-Activity-1.0," published November 18, 2010, which is incorporated by reference herein in its entirety.

As illustrated by a graphical illustration 204, the first conventional NFC device observes the one or more conventional detection pulses 206.1 through 206.N, referred to as one or more observed detection pulses 210.1 through 210.N. The one or more observed detection pulses 210.1 through 210.(N-1) are characterized as having substantially similar magnitudes. The substantially similar magnitudes of the one or more observed detection pulses 210.1 through 210.(N-1) indicate that the second conventional NFC device is not present within the magnetic field. As additionally illustrated by the graphical illustration 204, a magnitude of the observed detection pulse 210.N is not substantially similar to the magnitude of the observed detection pulse 210.(N-1). This difference in magnitudes indicates that the second conventional NFC device has entered into the magnetic field during the conventional detection pulse 206.N. Accordingly, the first conventional NFC device may enter into the conventional polling mode of operation 208 to establish communication with the second conventional NFC device. The first conventional NFC device continues to observe the conventional polling mode of operation 208, referred to as an observed polling mode of operation 212, to verify that the second conventional NFC device remains present within the magnetic field. The conventional detection mode of operation is further described in United States Patent Appl. No.: US-A-20100015917.

However, this simple detection of changes of the conventional detection mode is susceptible to changes in environment. For example, moving the first conventional NFC device around the environment may cause the magnitudes of the one or more conventional detection pulses 206.1 through 206.N to change. As another example, objects within the environment, such as metal objects or other non-NFC capable devices to provide some examples, entering into the magnetic field may cause the magnitudes of the one or more conventional detection pulses 206.1 through 206.N to change. However, these changes result from changes in the environment, not from the second conventional NFC becoming present within the magnetic field. Consequentially, the first conventional NFC device may improperly determine that the second conventional NFC device is present within the magnetic field and enter into the conventional polling mode of operation 208 when the second conventional NFC device is not present within the magnetic field.

Typically, these changes that result from the environment may be characterized as being linear. Whereas, changes that result from another NFC capable device becoming present within the magnetic field may be characterized as being non-linear. For example, the other NFC capable device begins to derive or harvest power upon entering the magnetic field which causes a non-linear change in the magnetic field. However, the conventional detection mode of operation is unable to distinguish between linear changes and non-linear changes; therefore, the conventional detection mode is susceptible to misinterpreting changes in the environment as an indication of the second conventional NFC is present within the magnetic field.

### EXEMPLARY DETECTION MODE OF OPERATION

However, the present invention is capable of differentiating between linear changes and non-linear changes such that changes in detection pulses of the present invention which are characterized as being linear may be disregarded as being changes in the environment. Those changes in the detection pulses of the present invention which are characterized as being non-linear may be identified as resulting from another NFC capable device becoming present within the magnetic field.

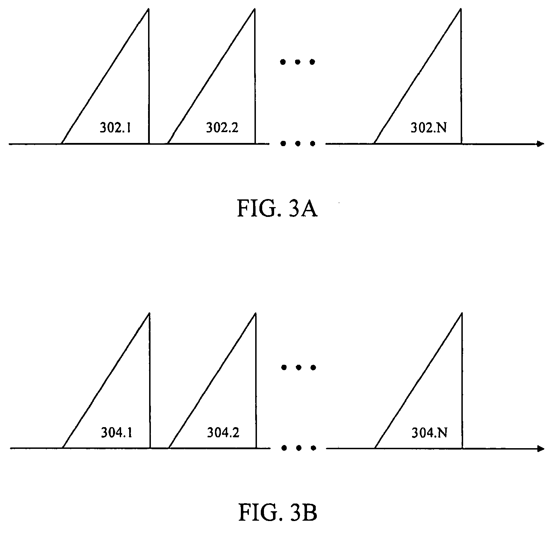

FIG. 3A illustrates a detection signal used by a first NFC capable device to detect a presence of a second NFC capable device within its magnetic field according to an exemplary embodiment of the present invention. Typically, a first NFC capable device, such as the first NFC device 102 to provide an example, is configured to operate in an initiator, or a reader, mode of operation and a second NFC capable device, such as the second NFC device 104 to provide an example, is configured to operate in a target, or a tag, mode of operation.

The first NFC capable device provides a detection sequence including one or more detection signals 302.1 through 302.N to detect for the presence of the second NFC capable device within its magnetic field. Typically, the one or more detection signals 302.1 through 302.N are characterized as being substantially similar ramp functions. In an exemplary embodiment, the ramp functions may be approximated using step or staircase functions having ever increasing magnitudes. However, the one or more detection signals 302.1 through 302.N are not limited to ramp functions; those skilled in the relevant art(s) may implement the one or more detection signals 302.1 through 302.N using any other suitable monotonically increasing and/or decreasing function without departing from the spirit and scope of the present invention. The first NFC capable device may modulate the one or more detection signals 302.1 through 302.N onto a carrier wave to provide the detection sequence.

The first NFC capable device observes the detection sequence to recover one or more observed detection signals 304.1 through 304.N to detect a change in the magnetic field. The change in the magnetic field may indicate that the second NFC capable device may be present within the magnetic field. For example, the first NFC capable device may compare one of the observed detection signals 304.1 through 304.N with a previous observed detection signal from among the observed detection signals 304.1 through 304.N to detect the change in the magnetic field. As another example, the first NFC capable device may compare one of the observed detection signals 304.1 through 304.N with a corresponding one of the one or more detection signals 302.1 through 302.N to detect the change in the magnetic field.

Typically, the first NFC capable device may observe no change, a linear change, and/or a non-linear change in its magnetic field. For example, as shown in FIG. 3B, each of the observed detection signals 304.1 through 304.N are substantially similar indicating no change in the magnetic field of the first NFC capable device. As another example, also shown in FIG. 3B, each of the observed detection signals 304.1 through 304.N have substantially similar signal envelopes as their corresponding the one or more detection signal 302.1 through 302.N indicating no change in the magnetic field of the first NFC capable device. The lack of change in the magnetic field as demonstrated in these examples of FIG. 3B indicates that the second NFC capable device is not present within the magnetic field of the first NFC capable device.

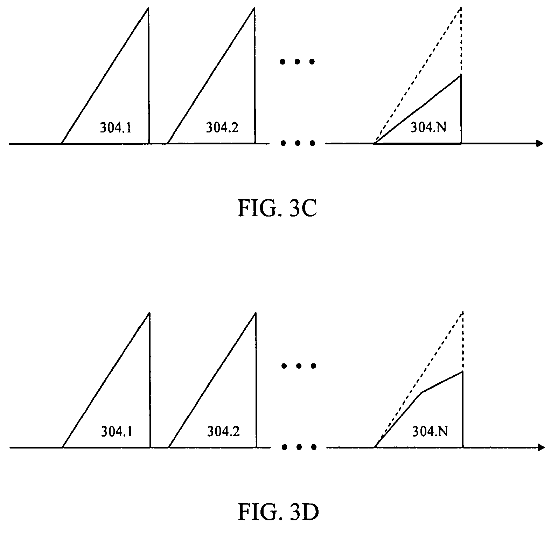

Objects within the environment, such as metal objects or other non-NFC capable devices to provide some examples, may enter into the magnetic field of the first NFC capable device. These objects may cause the linear change in the magnetic field of the first NFC capable device. For example, as shown in FIG. 3C, each of the observed detection signals 304.1 through 304.(N-1) are substantially similar indicating no change in the magnetic field of the first NFC capable device. However, the observed detection signal 304.N is different from the observed detection signals 304.1 through 304.(N-1) indicating a change in the magnetic field of the first NFC capable device. As another example, also shown in FIG. 3C, each of the observed detection signals 304.1 through 304.(N-1) have substantially similar signal envelopes as their corresponding one or more detection signal 302.1 through 302.(N-1) indicating no change in the magnetic field of the first NFC capable device. However, the observed detection signal 304.N has a different signal envelope as the detection signal 302.N indicating a change in the magnetic field of the first NFC capable device. The change in the magnetic field as demonstrated in these examples of FIG. 3C may be characterized as the linear change in the magnetic field of the first NFC capable device. For example, the observed detection signal 304.N is linearly related to the detection signal 302.N and/or the observed detection signals 304.1 through 304.(N-1). The first NFC capable device is capable of recognizing the linear change in the magnetic field as resulting from objects within the environment entering into the magnetic field of the first NFC capable device.

Typically, the second NFC capable device derives or harvests power from the one or more detection signals 302.1 through 302.N. The second NFC capable device turns on after sufficient power has been harvested from the one or more detection signals 302.1 through 302.N. The turning on of the second NFC capable device, as well as harvesting of the power, may cause the non-linear change in the magnetic field of the first NFC capable device.

For example, as shown in FIG. 3D, each of the observed detection signals 304.1 through 304.(N-1) are substantially similar indicating no change in the magnetic field of the first NFC capable device. However, the observed detection signal 304.N is different from the observed detection signals 304.1 through 304.(N-1) indicating a change in the magnetic field of the first NFC capable device. As another example, also shown in FIG. 3D, each of the observed detection signals 304.1 through 304.(N-1) have substantially similar signal envelopes as their corresponding one or more detection signal 302.1 through 302.(N-1) indicating no change in the magnetic field of the first NFC capable device. However, the observed detection signal 304.N has a different signal envelope as the detection signal 302.N indicating a change in the magnetic field of the first NFC capable device. The change in the magnetic field as demonstrated in these examples of FIG. 3D may be characterized as the non-linear change in the magnetic field of the first NFC capable device. For example, the observed detection signal 304.N is not linearly related to the detection signal 302.N and/or the observed detection signals 304.1 through 304.(N-1). The first NFC capable device is capable of recognizing the non-linear change in the magnetic field as resulting from the second NFC capable device entering into its magnetic field.

It should be noted that the linear change as shown in FIG. 3C and the non- linear change as shown in FIG. 3D are for illustrative purposes only, those skilled in the relevant art(s) will recognize that other linear and/or non-linear changes are possible without departing from the scope of the present invention.

Referring again to FIG.1, upon detecting the presence of the second NFC capable device 104 within its magnetic field, the first NFC capable device 102 may enter into a polling mode, such as the conventional polling mode of operation 208 or any other suitable polling mode that will be apparent to those skilled in the relevant art(s) without departing from the scope of the present invention, to establish communication with the second NFC capable device.

The first NFC device 102 modulates its corresponding information onto the first carrier wave and generates the first magnetic field by applying the modulated information communication to the first antenna to provide the first information communication 152. The first NFC device 102 continues to apply the first carrier wave without its corresponding information to continue to provide the first information communication 152 once the information has been transferred to the second NFC device 104. The first NFC device 102 is sufficiently proximate to the second NFC device 104 such that the first information communication 152 is inductively coupled onto a second antenna of the second NFC device 104.

The second NFC device 104 derives or harvests power from the first information communication 152 to recover, to process, and/or to provide a response to the information. The second NFC device 104 demodulates the first information communication 152 to recover and/or to process the information. The second NFC device 104 may respond to the information by applying its corresponding information to the first carrier wave that is inductively coupled onto the second antenna to provide the second modulated information communication 154.

Further operations of the first NFC device 102 and/or the second NFC device 104 may be described in International Standard ISO/IE 18092:2004(E), "Information Technology - Telecommunications and Information Exchange Between Systems - Near Field Communication - Interface and Protocol (NFCIP-1)," published on April 1, 2004 and International Standard ISO/IE 21481:2005(E), "Information Technology - Telecommunications and Information Exchange Between Systems - Near Field Communication - Interface and Protocol -2 (NFCIP-2)," published on January 15, 2005.

Although FIG. 1 and FIG. 3A through FIG. 3D has been described in terms of an initiator mode operation and a target mode of operation, those skilled in the relevant art(s) will recognize that the first NFC device 102 and/or the second NFC device 104 as described in FIG. 1 and/or the first NFC capable device and/or the second NFC capable device as described in FIG. 3A through FIG. 3D may alternatively be configured to operate in a communicator mode of operation without departing from the spirit and scope of the present invention. These NFC devices and/or NFC capable devices are configurable to operate in the initiator mode operation and/or the target mode of operation and may switch between these modes of operation in the communicator mode of operation.

### METHOD FOR DETECTING NFC CAPABLE DEVICES

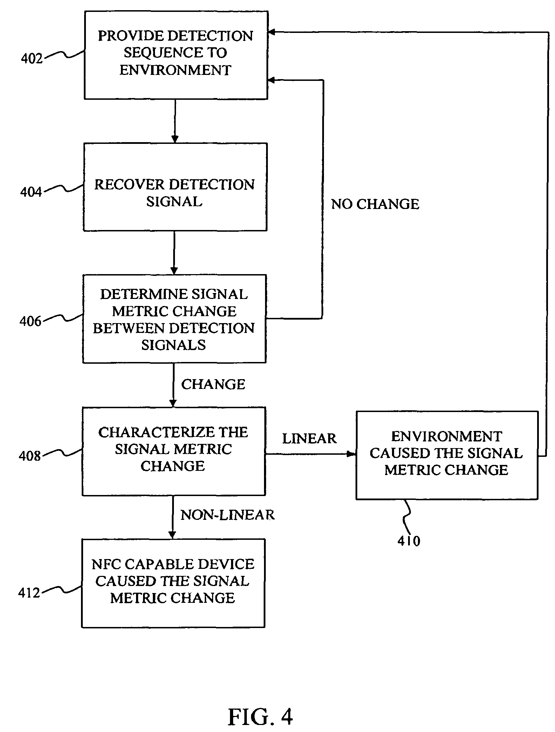

FIG. 4 is a flowchart of exemplary operational steps for detecting the presence of a NFC capable device within a magnetic field according to an exemplary embodiment of the present invention. The invention is not limited to this operational description. Rather, it will be apparent to persons skilled in the relevant art(s) from the teachings herein that other operational control flows are within the scope of the present invention. The following discussion describes the steps in FIG. 4.

At step 402, the operational control flow receives a detection signal, such one of the one or more detection signals 302.1 through 302.N to provide an example. The operational control flow provides a detection sequence including the detection signal to its environment. For example, the operational control flow may modulate the detection signal using a carrier wave and generates a magnetic field using the modulated detection signal to provide the detection sequence. The detection signal represents a monotonically increasing and/or decreasing signal, such as a ramp signal to provide an example, that is to be modulated onto a carrier wave.

At step 404, the operational control flow observes the detection sequence from 402 as it is being provided to its environment to provide an observed detection sequence. The operational control demodulates the detection sequence from 402 to recover an observed detection signal, such as one of the one or more observed detection signals 304.1 through 304.N to provide an example.

At step 406, the operational control flow determines a signal metric change between detection signals. For example, the operational control flow may compare one or more signal metrics of the detection signal from step 402 and one or more signal metrics of the observed detection signal from step 404 to provide the signal metric change. As another example, the operational control flow may compare the one or more signal metrics of observed detection signal from step 404 with one or more signal metrics of one or more prior observed detection signals to provide the signal metric change. The operational control flow may revert to step 402 to receive another detection signal when the signal metric change is approximately equal to zero. Alternatively, the operational control flow reverts back to step 402 may revert to step 402 when the signal metric change is less than and/or equal to a threshold. In this alternate, the threshold is used to compensate for signal metric changes that may be attributed other factors, such as generation of the detection sequence from step 406 and/or recovery of the observed detection sequence from step 404 to provide some examples, that are not attributed to NFC devices becoming present in a magnetic field. For example, the threshold may be used to compensate for linear and/or non-linear effects that may be attributed to a modulator for generating the detection sequence from step 406. As another example, the threshold may be used to compensate for linear and/or non-linear effects that may be attributed to a demodulator for recovering the observed detection sequence from step 404. As a further example, the threshold may be used to compensate for linear and/or non-linear effects that may be attributed to a communication channel.

The operational control flow determines that the NFC capable device may be present within the magnetic field from step 402 and proceeds to step 408 when the signal metric change is greater than zero or, alternatively, greater than the threshold.

At step 408, the operational control flow characterizes the signal metric change from step 406 as being non-linear or linear. For example, the operational control flow may differentiate the signal metric change from step 406 to determine whether it is non-linear or linear. Typically, a derivative of a linear function is characterized as being substantially constant. The operational control flow may characterize the signal metric change from step 406 as being linear when its derivative is substantially constant or as being non-linear when its derivative is not substantially constant. Additionally, the operational control flow may use the derivative as an input to a trigger a counting device, such as a binary counter to provide an example. In this alternate, a count of the counting device changes from its present state to another state when the derivative changes. Additionally, in this alternate, the operational control flow may characterize the signal metric change from step 406 as being linear when the count of the counting device is less than or equal to a predetermined value or as being non-linear when the count of the counting device is greater than or equal to the predetermined value.

At step 410, the operational control flow characterizes the signal metric change from step 406 as resulting from changes in the environment. The operational control flow determines that the NFC capable device is not present within the magnetic field from step 402 and reverts to step 402 to provide another detection signal to its environment.

At step 412, the operational control flow characterizes the signal metric change from step 406 as resulting from the NFC capable device being present within the magnetic field from step 402.

### A FIRST EXEMPLARY NFC DEVICE

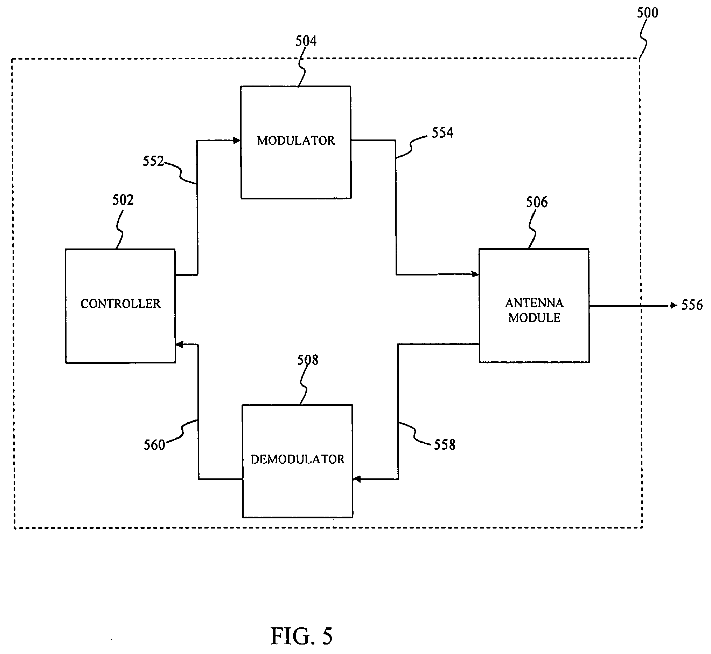

FIG. 5 illustrates a block diagram of a NFC device that may be used to detect a presence of other NFC capable devices according to an exemplary embodiment of the invention. A NFC device 500 may be configurable to operate in a detection mode of operation to detect a presence of another NFC capable device within in its magnetic field. It should be noted that FIG. 5 illustrates only the detection mode of operation, those skilled in the relevant art(s) will recognize that the NFC device 500 may be configured to operate in other modes of operation, such as a peer (P2P) communication mode or a reader/writer (R/W) communication mode to provide some examples, without departing from the spirit and scope of the present invention. The NFC device 500 includes a controller module 502, a modulator module 504, an antenna module 506, and a demodulator module 508. The NFC device 500 may represent an exemplary embodiment of the first NFC device 102.

The controller module 502 controls overall operation and/or configuration of the NFC device 500. The controller module 502 generates a detection signal 552, such one of the one or more detection signals 302.1 through 302.N to provide an example, in the detection mode of operation. The detection signal 552 may represent a monotonically increasing and/or decreasing function, such as a ramp function to provide an example, or a step or staircase function to approximate the monotonically increasing and/or decreasing function.

The controller module 502 may generate the detection signal 552 in response to a command. The command may be provided to the controller module 502 from one or more data storage devices such as one or more contactless transponders, one or more contactless tags, one or more contactless smartcards, any other machine-readable mediums that will be apparent to those skilled in the relevant art(s) without departing from the scope of the invention, or any combination thereof. The other machine-readable medium may include, but is not limited to, read only memory (ROM), random access memory (RAM), magnetic disk storage media, optical storage media, flash memory devices, electrical, optical, acoustical or other forms of propagated signals such as carrier waves, infrared signals, digital signals to provide some examples. The controller module 502 may also receive the command from a user interface such as a touch-screen display, an alphanumeric keypad, a microphone, a mouse, a speaker, any other suitable user interface that will be apparent to those skilled in the relevant art(s) without departing from the spirit and scope of the invention to provide some examples. The controller module 502 may further receive the command from other electrical devices or host devices coupled to the NFC device 500.

The modulator module 504 modulates the detection signal 552 onto a carrier wave, such as a radio frequency carrier wave having a frequency of approximately 13.56 MHz to provide an example, using any suitable analog or digital modulation technique to provide a modulated detection signal 554. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM) and/or any other suitable modulation technique that will be apparent to those skilled in the relevant art(s). In an exemplary embodiment, the modulator module 504 may include a direct digital synthesizer (DDS) under control of the controller module 502 to generate the detection signal 552. In this exemplary embodiment, the modulator module 504 further includes an analog to digital converter (ADC) to convert the detection signal 552 from a digital representation to an analog representation in accordance with the carrier wave to provide the modulated detection signal 554.

The antenna module 506 applies the modulated detection signal 554 to an inductive coupling element, such as a resonant tuned circuit to provide an example, to generate a magnetic field to provide a detection sequence 556. The antenna module 506 observes the detection sequence 556 to provide an observed detection sequence 560.

The demodulator module 508 demodulates the observed detection sequence 558 using any suitable analog or digital modulation technique to provide a recovered detection signal 560. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM) and/or any other suitable modulation technique that will be apparent to those skilled in the relevant art(s).

The controller module 502 may determine one of more signal metrics of the detection signal 552 and/or the recovered detection signal 560. The one or more signal metrics may include a mean voltage and/or current level, an average voltage and/or current level, an instantaneous voltage and/or current level, a root mean square voltage and/or current level, a mean power, an average power, an instantaneous power, a root mean square power, a signal envelope, and/or any other suitable signal metric of the detection signal 552 and/or the recovered detection signal 560 which will be apparent to those skilled in the relevant art(s) without departing from the scope of the invention.

The controller module 502 may compare the one of more signal metrics of the recovered detection signal 560 with one or more previous signal metrics of the recovered detection signal 560 to provide a signal metric change. Alternatively, the controller module 502 may compare the one of more signal metrics of the recovered detection signal 560 with the one of more signal metrics of the detection signal 552 to provide the signal metric change.

The controller module 502 may compare the signal metric change with a threshold to determine whether the signal metric change indicates a difference between signal metrics. The threshold is used to compensate for differences between the detection signal 552 and/or the recovered detection signal 560 that may be attributed to imperfections in the NFC device 500, such as imperfections within the modulator module 504, the antenna module 506, or the demodulator module 508 to provide some examples. For example, imperfections within the demodulator module 508 may cause unwanted attenuation of the recovered detection signal 560. This unwanted attenuation of the recovered detection signal 560 is not attributed to another NFC capable device being present within the magnetic field. Therefore, the controller compares the signal metric change with the threshold to substantially reduce the possibility of the controller module interpreting the signal metric change as being caused by another NFC capable device when the signal metric change may be attributed to imperfections within the NFC device 500.

The signal metric change indicates no difference between signal metrics when the signal metric change is less than or equal to the threshold. In this situation, any changes in signal metrics between the one of more signal metrics of the recovered detection signal 560 and the one of more signal metrics of the detection signal 552 and/or the one or more previous signal metrics of the recovered detection signal 560 may be attributed to imperfections within the NFC device 500, not another NFC device becoming present within the magnetic field.

The signal metric change indicates the difference between signal metrics when the signal metric change is greater than the threshold. The controller module 502 analyzes the signal metric change to determine whether another NFC capable device is present within the magnetic field. For example, the controller module 502 may differentiate the signal metric change to determine whether it is non-linear or linear. The controller module 502 may characterize the signal metric change as being linear when its derivative is substantially constant or as being non-linear when its derivative is not substantially constant. Additionally, the controller module 502 may use the derivative as an input to trigger a counting device, such as a binary counter to provide an example. In this alternate, a count of the counting device changes from its present state to another state when the derivative changes. Additionally, in this alternate, the controller module 502 may characterize the difference from step 406 as being linear when the count of the counting device is less than or equal to a predetermined value or as being non-linear when the count of the counting device is greater than or equal to the predetermined value.

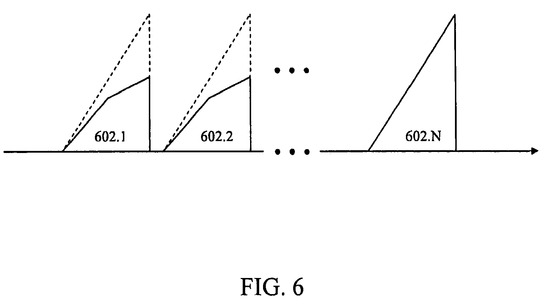

Referring again to FIG. 3A, upon detecting the presence of the second NFC capable device within its magnetic field as described in FIG. 3A through FIG. 3D, the first NFC capable device may continue to provide the detection sequence including the one or more detection signals 302.1 through 302.N to verify that the second NFC capable device remains within its magnetic field. For example, as shown in FIG. 6, the first NFC capable device observes the detection sequence to recover one or more observed detection signals 602.1 through 602.N. The first NFC capable device compares a corresponding one or more of the observed detection signals 602.1 through 602.N with a corresponding one or more of the one or more detection signals 302.1 through 302.N to detect whether the second NFC capable remains present within its magnetic field.

As shown in FIG. 6, signal envelopes of the observed detection signals 602.1 through 602.(N-1) are substantially different from signal envelopes of their corresponding detection signals 302.1 through 302.(N-1). In this situation, the second NFC capable device continues to derive or harvest power from the one or more detection signals 302.1 through 302.(N-1). Therefore, the second NFC capable device remains within the magnetic field of the first NFC capable device. It should be noted that the differences in the signal envelopes of the one or more detection signals 602.1 through 602.(N-1) as shown in FIG. 6 are for illustrative purposes only, those skilled in the relevant art(s) will recognize that other differences in the signal envelopes of the observed detection signals 602.1 through 602.(N-1) are possible without departing from the scope of the present invention.

However, a signal envelope of the observed detection signal 602.N is substantially similar to a signal envelope of the detection signals 302.N indicating that the second NFC capable device no longer derives or harvests power from the detection signal 302.N. Therefore, the second NFC capable device no remains within the magnetic field of the first NFC capable device. Consequently, the first NFC capable device begins to detect for the presence of the second NFC capable device as discussed above.

### CONCLUSION

It will be apparent to those skilled in the relevant art(s) that various changes in form and detail can be made therein without departing from the scope of the invention. Thus the invention should not be limited by any of the above-described exemplary embodiments, but should be defined only in accordance with the following claims.

## Claims

1. A near field communication, NFC, device (102, 500), comprising:
a modulator module (504) configured to modulate a detection signal (302, 552) onto a carrier wave to provide a modulated detection signal (554);
an antenna module (506) configured to apply the modulated detection signal (554) to an inductive coupling element to generate a magnetic field to provide a detection sequence (556);
a demodulator module (508) configured to demodulate the detection sequence (558) to provide an observed detection signal (304, 602); and
a controller module (502) configured to compare a signal metric of the observed detection signal (304, 602) and a signal metric of the detection signal (302, 552) or a previous observed detection signal (304, 602) to determine a signal metric change; and to indicate a second NFC device (104) as being present within the magnetic field when the observed detection signal (302, 552) is non-linearly related to the detection signal r (302, 552) or the previous observed detection signal (304, 602) based on the determined signal metric change.

2. The NFC device (102, 500) of claim 1, wherein the controller module (502) is further configured to compare a signal metric of the observed detection signal (304, 602) and a signal metric of the previous observed detection signal (304, 602).

3. The NFC device (102, 500) of claim 1, wherein the signal metric of the detection signal (302, 552) is a signal envelope of the detection signal (302, 552) and the signal metric of the observed detection signal (304, 602) is a signal envelope of the observed detection signal (304, 602).

4. The NFC device (102, 500) of claim 1, wherein the controller module (502) is further configured to indicate the second NFC device (104) as not being present when the detection signal (302, 552) is linearly related to the observed detection signal (304, 602).

5. The NFC device (102, 500) of claim 1, wherein the controller module (502) is further configured to indicate the second NFC device (104) as not being present when the detection signal (302, 552) is approximately equal to the observed detection signal (304, 602).

6. The NFC device (102, 500) of claim 1, wherein the controller module (502) is further configured to compare a signal metric of the observed detection signal (304, 602) and a signal metric of the previous observed detection signal (304, 602) to determine a signal metric change.

7. The NFC device (102, 500) of claim 6, wherein the controller module (502) is further configured to characterize the signal metric change between detection signals (304, 602) as being non-linear or linear, to indicate the second NFC device (104) as being present within the magnetic field when the signal metric change is characterized as being substantially non-linear, and to indicate the second NFC device (104) as not being present within the magnetic field when the signal metric change is characterized as being substantially linear.

8. The NFC device (102, 500) of claim 1, wherein the controller module (502) is configured
to compare a signal metric of the observed detection signal (304, 602) and a signal metric of a previous observed detection signal (304, 602); and
to indicate a second NFC device (104) as being present within the magnetic field when the observed detection signal (304, 602) is non-linearly related to the previous observed detection signal (304, 602).

9. The NFC device (102, 500) of claim 1, wherein the controller module (502) is further configured to compare the signal metric change with a threshold to determine whether the signal metric change indicates a difference between signal metrics.

10. The NFC device (102, 500) of claim 1, wherein the demodulator module (508) is further configured to demodulate the observed detection sequence (558) using analog or digital modulation technique to provide a recovered detection signal (560).

11. The NFC device (102, 500) of claim 10, wherein the controller module (502) is further configured to determine one of more signal metrics of the detection signal (552) and/or the recovered detection signal (560).

12. The NFC device (102, 500) of claim 11, wherein the controller module (502) is further configured to compare the one of more signal metrics of the recovered detection signal (560) with one or more previous signal metrics of the recovered detection signal (560) to provide a signal metric change; or
to compare the one of more signal metrics of the recovered detection signal (560) with the one of more signal metrics of the detection signal (552) to provide the signal metric change.

13. The NFC device (102, 500) of claim 1, wherein the NFC device (102, 500) is further configured to compare one or more of the observed detection signals (602) with a corresponding one or more of the detection signals (302, 552) to detect whether the second NFC device (104) remains present within its magnetic field.

14. A method for detection a presence of a near field communication, NFC, device (102, 500), comprising:
a) modulating, by a second NFC device (104), a detection signal (302, 552) onto a carrier wave to provide a modulated detection signal (554);
b) applying, by the second NFC device (104), the modulated detection signal (554) to an inductive coupling element to generate a magnetic field to provide a detection sequence (556);
c) demodulating, by the second NFC device (104) the detection sequence (556) to provide an observed detection signal (304, 602);
d) comparing a signal metric of the observed detection signal (304, 602) and a signal metric of the detection signal (302, 552) or a previous observed detection signal (304, 602) to determine a signal metric change; and
e) indicating, by the second NFC device (104), the NFC device (102, 500) as being present within the magnetic field when the observed detection signal (304, 602) is non-linearly related to the detection signal (302, 552) or the previous observed detection signal (304, 602) based on the determined signal metric change.

15. The method of claim 12, wherein step (d) comprises:
(i) comparing a signal metric of the observed detection signal (304, 602) and a signal metric of a previous detection signal (302, 552) to determine a signal metric change;
(ii) characterizing the signal metric change between detection signals (302, 552) as being non-linear or linear;
(iii)indicating the NFC device (102, 500) as being present within the magnetic field when the signal metric change is characterized as being substantially non-linear; and
(iv)indicating the second NFC device as not being present within the magnetic field when the signal metric change is characterized as being substantially linear.

## Patentansprüche

1. Nahfeldkommunikations (Near Field Communication, NFC) -Vorrichtung (102, 500), die aufweist:
ein Modulatormodul (504), das dazu konfiguriert ist, ein Ermittlungssignal (302, 552) auf eine Trägerwelle zu modulieren, um ein moduliertes Ermittlungssignal (554) bereitzustellen;
ein Antennenmodul (506), das dazu konfiguriert ist, das modulierte Ermittlungssignal (554) an ein induktives Kopplungselement anzulegen, um ein Magnetfeld zu erzeugen, um eine Ermittlungssequenz (556) bereitzustellen;
ein Demodulatormodul (508), das dazu konfiguriert ist, die Ermittlungssequenz (558) zu demodulieren, um ein beobachtetes Ermittlungssignal (304, 602) bereitzustellen; und
ein Controllermodul (502), das dazu konfiguriert ist, eine Signalmetrik des beobachteten Ermittlungssignals (304, 602) und eine Signalmetrik des Ermittlungssignals (302, 552) oder eines früheren beobachteten Ermittlungssignals (304, 602) zu vergleichen, um eine Signalmetrik-Änderung zu bestimmen;
und eine zweite NFC-Vorrichtung (104) als in dem Magnetfeld vorhanden anzuzeigen, wenn das beobachtete Ermittlungssignal (302, 552) nicht linear zu dem Ermittlungssignal (302, 552) oder dem früheren beobachteten Ermittlungssignal (304, 602) in Beziehung steht, basierend auf der bestimmten Signalmetrik-Änderung.

2. NFC-Vorrichtung (102, 500) nach Anspruch 1, wobei das Controllermodul (502) des Weiteren dazu konfiguriert ist, eine Signalmetrik des beobachteten Ermittlungssignals (304, 602) und eine Signalmetrik des früheren beobachteten Ermittlungssignals (304, 602) zu vergleichen.

3. NFC-Vorrichtung (102, 500) nach Anspruch 1, wobei die Signalmetrik des Ermittlungssignals (302, 552) eine Signaleinhüllende des Ermittlungssignals (302, 552) ist und die Signalmetrik des beobachteten Ermittlungssignals (304, 602) eine Signaleinhüllende des beobachteten Ermittlungssignals (304, 602) ist.

4. NFC-Vorrichtung (102, 500) nach Anspruch 1, wobei das Controllermodul (502) des Weiteren dazu konfiguriert ist, die zweite NFC-Vorrichtung (104) als nicht vorhanden anzuzeigen, wenn das Ermittlungssignal (302, 552) linear mit dem beobachteten Ermittlungssignal (304, 602) in Beziehung steht.

5. NFC-Vorrichtung (102, 500) nach Anspruch 1, wobei das Controllermodul (502) des Weiteren dazu konfiguriert ist, die zweite NFC-Vorrichtung (104) als nicht vorhanden anzuzeigen, wenn das Ermittlungssignal (302, 552) annähernd gleich dem beobachteten Ermittlungssignal (304, 602) ist.

6. NFC-Vorrichtung (102, 500) nach Anspruch 1, wobei das Controllermodul (502) des Weiteren dazu konfiguriert ist, eine Signalmetrik des beobachteten Ermittlungssignals (304, 602) und eine Signalmetrik des früheren beobachteten Ermittlungssignals (304, 602) zu vergleichen, um eine Signalmetrikänderung zu bestimmen.

7. NFC-Vorrichtung (102, 500) nach Anspruch 6,
wobei das Controllermodul (502) des Weiteren dazu konfiguriert ist, die Signalmetrikänderung zwischen Ermittlungssignalen (304, 602) als nicht linear oder als linear zu kennzeichnen, um die zweite NFC-Vorrichtung (104) als in dem Magnetfeld vorhanden anzuzeigen, wenn die Signalmetrikänderung als im Wesentlichen nicht linear gekennzeichnet ist, und die zweite NFC-Vorrichtung (104) als nicht in dem Magnetfeld vorhanden anzuzeigen, wenn die Signalmetrikänderung als im Wesentlichen linear gekennzeichnet ist.

8. NFC-Vorrichtung (102, 500) nach Anspruch 1,
wobei das Controllermodul (502) dazu konfiguriert ist, eine Signalmetrik des beobachteten Ermittlungssignals (304, 602) und eine Signalmetrik eines früheren beobachteten Ermittlungssignals (304, 602) zu vergleichen; und
eine zweite NFC-Vorrichtung (104) als in dem Magnetfeld vorhanden anzuzeigen, wenn das beobachtete Ermittlungssignal (304, 602) nicht linear zu dem früheren beobachteten Ermittlungssignal (304, 602) in Beziehung steht.

9. NFC-Vorrichtung (102, 500) nach Anspruch 1, wobei das Controllermodul (502) des Weiteren dazu konfiguriert ist, die Signalmetrikänderung mit einem Schwellenwert zu vergleichen, um zu ermitteln, ob die Signalmetrikänderung eine Differenz zwischen Signalmetriken anzeigt.

10. NFC-Vorrichtung (102, 500) nach Anspruch 1, wobei das Demodulatormodul (508) des Weiteren dazu konfiguriert ist, die beobachtete Ermittlungssequenz (558) unter Verwendung einer analogen oder digitalen Modulationstechnik zu demodulieren, um ein wiederhergestelltes Ermittlungssignal (560) bereitzustellen.

11. NFC-Vorrichtung (102, 500) nach Anspruch 10, wobei das Controllermodul (502) des Weiteren dazu konfiguriert ist, eine mehrerer Signalmetriken des Ermittlungssignals (552) und/oder des wiederhergestellten Ermittlungssignals (560) zu bestimmen.

12. NFC-Vorrichtung (102, 500) nach Anspruch 11, wobei das Controllermodul (502) des Weiteren dazu konfiguriert ist, die eine mehrerer Signalmetriken des wiederhergestellten Ermittlungssignals (560) mit einer oder mehreren früheren Signalmetriken des wiederhergestellten Ermittlungssignals (560) zu vergleichen, um eine Signalmetrikänderung bereitzustellen; oder
die eine mehrerer Signalmetriken des wiederhergestellten Ermittlungssignals (560) mit der einen mehrerer Signalmetriken des Ermittlungssignals (552) zu vergleichen, um die Signalmetrikänderung bereitzustellen.

13. NFC-Vorrichtung (102, 500) nach Anspruch 1, wobei die NFC-Vorrichtung (102, 500) des Weiteren dazu konfiguriert ist, eines oder mehrere der beobachteten Ermittlungssignale (602) mit einem entsprechenden einen oder mehreren der Ermittlungssignale (302, 552) zu vergleichen, um zu ermitteln, ob die zweite NFC-Vorrichtung (104) in ihrem Magnetfeld vorhanden bleibt.

14. Verfahren zum Ermitteln des Vorhandenseins einer Nahfeldkommunikations (Near Field Communication, NFC) -Vorrichtung (102, 500), das umfasst:
a) Modulieren, durch eine zweite NFC-Vorrichtung (104), eines Ermittlungssignals (302, 552) auf eine Trägerwelle, um ein moduliertes Ermittlungssignal (554) bereitzustellen;
b) Anlegen, durch die zweite NFC-Vorrichtung (104), des modulierten Ermittlungssignals (554) an ein induktives Kopplungselement, um ein Magnetfeld zu erzeugen, um eine Ermittlungssequenz (556) bereitzustellen;
c) Demodulieren, durch die zweite NFC-Vorrichtung (104), der Ermittlungssequenz (556), um ein beobachtetes Ermittlungssignal (304, 602) bereitzustellen
d) Vergleichen einer Signalmetrik des beobachteten Ermittlungssignals (304, 602) und einer Signalmetrik des Ermittlungssignals (302, 552) oder eines früheren beobachteten Ermittlungssignals (304, 602), um eine Signalmetrik-Änderung zu bestimmen; und
Anzeigen, durch die zweite NFC-Vorrichtung (104), der NFC-Vorrichtung (102, 500) als in dem Magnetfeld vorhanden, wenn das beobachtete Ermittlungssignal (302, 552) nicht linear zu dem Ermittlungssignal (302, 552) oder dem früheren beobachteten Ermittlungssignal (304, 602) in Beziehung steht, basierend auf der bestimmten Signalmetrik-Änderung.

15. Verfahren nach Anspruch 12, wobei Schritt (d) umfasst:
(i) Vergleichen einer Signalmetrik des beobachteten Ermittlungssignals (304, 602) und einer Signalmetrik eines früheren Ermittlungssignals (302, 552), um eine Signalmetrikänderung zu bestimmen;
(ii) Kennzeichnen der Signalmetrikänderung zwischen Ermittlungssignalen (302, 552) als nicht linear oder linear;
(iii) Anzeigen der NFC-Vorrichtung (102, 500) als in dem Magnetfeld vorhanden, wenn die Signalmetrikänderung als im Wesentlichen nicht linear gekennzeichnet ist; und
(iv) Anzeigen der zweiten NFC-Vorrichtung als nicht in dem Magnetfeld vorhanden, wenn die Signalmetrikänderung als im Wesentlichen linear gekennzeichnet ist.

## Revendications

1. Dispositif de communication en champ proche, NFC (102, 500), comprenant :
un module de modulateur (504) configuré pour moduler un signal de détection (302, 552) sur une onde porteuse pour fournir un signal de détection modulé (554) ;
un module d'antenne (506) configuré pour appliquer le signal de détection modulé (554) à un élément de couplage inductif pour générer un champ magnétique en vue de fournir une séquence de détection (556) ;
un module de démodulateur (508) configuré pour démoduler la séquence de détection (558) en vue de fournir un signal de détection observé (304, 602) ; et
un module de commande (502) configuré pour comparer une métrique de signal du signal de détection observé (304, 602) et une métrique de signal du signal de détection (302, 552) ou d'un précédent signal de détection observé (304, 602) pour déterminer un changement de métrique de signal ; et
pour indiquer un second dispositif NFC (104) comme étant présent à l'intérieur du champ magnétique lorsque le signal de détection observé (302, 552) est lié de façon non linéaire au signal de détection (302, 552) ou au précédent signal de détection observé (304, 602) sur la base du changement de métrique de signal déterminé.

2. Dispositif NFC (102, 500) selon la revendication 1, dans lequel le module de commande (502) est configuré en outre pour comparer une métrique de signal du signal de détection observé (304, 602) et une métrique de signal du précédent signal de détection observé (304, 602).

3. Dispositif NFC (102, 500) selon la revendication 1, dans lequel la métrique de signal du signal de détection (302, 552) est une enveloppe de signal du signal de détection (302, 552) et la métrique de signal du signal de détection observé (304, 602) est une enveloppe de signal du signal de détection observé (304, 602).

4. Dispositif NFC (102, 500) selon la revendication 1, dans lequel le module de commande (502) est configuré en outre pour indiquer le second dispositif NFC (104) comme n'étant pas présent lorsque le signal de détection (302, 552) est lié de manière linéaire au signal de détection observé (304, 602).

5. Dispositif NFC (102, 500) selon la revendication 1, dans lequel le module de commande (502) est configuré en outre pour indiquer le second dispositif NFC (104) comme n'étant pas présent lorsque le signal de détection (302, 552) est approximativement égal au signal de détection observé (304, 602).

6. Dispositif NFC (102, 500) selon la revendication 1, dans lequel le module de commande (502) est configuré en outre pour comparer une métrique de signal du signal de détection observé (304, 602) et une métrique de signal du précédent signal de détection observé (304, 602) pour déterminer un changement de métrique de signal.

7. Dispositif NFC (102, 500) selon la revendication 6, dans lequel le module de commande (502) est configuré en outre pour caractériser le changement de métrique de signal entre des signaux de détection (304, 602) comme étant non linéaire ou linéaire, pour indiquer le second dispositif NFC (104) comme étant présent au sein du champ magnétique lorsque le changement de métrique de signal est caractérisé comme étant sensiblement non linéaire, et pour indiquer le second dispositif NFC (104) comme n'étant pas présent au sein du champ magnétique lorsque le changement de métrique de signal est caractérisé comme étant sensiblement linéaire.

8. Dispositif NFC (102, 500) selon la revendication 1, dans lequel le module de commande (502) est configuré pour comparer une métrique de signal du signal de détection observé (304, 602) et une métrique de signal d'un précédent signal de détection observé (304, 602) ; et
pour indiquer un second dispositif NFC (104) comme étant présent à l'intérieur du champ magnétique lorsque le signal de détection observé (304, 602) est lié de manière non linéaire au précédent signal de détection observé (304, 602).

9. Dispositif NFC (102, 500) selon la revendication 1, dans lequel le module de commande (502) est configuré en outre pour comparer le changement de métrique de signal à un seuil pour déterminer si le changement de métrique de signal indique une différence entre des métriques de signaux.

10. Dispositif NFC (102, 500) selon la revendication 1, dans lequel le module de démodulateur (508) est configuré en outre pour démoduler la séquence de détection observée (558) en utilisant une technique de modulation numérique ou analogique en vue de fournir un signal de détection récupéré (560).

11. Dispositif NFC (102, 500) selon la revendication 10, dans lequel le module de commande (502) est configuré en outre pour déterminer une des plusieurs métriques de signaux du signal de détection (552) et/ou du signal de détection récupéré (560).

12. Dispositif NFC (102, 500) selon la revendication 11, dans lequel le module de commande (502) est configuré en outre pour comparer l'une des plusieurs métriques de signaux du signal de détection récupéré (560) à une ou plusieurs précédentes métriques de signaux du signal de détection récupéré (560) en vue de fournir un changement de métrique de signal ; ou
pour comparer l'une des plusieurs métriques de signaux du signal de détection récupéré (560) à l'une des plusieurs métriques de signaux du signal de détection (552) en vue de fournir le changement de métrique de signal.

13. Dispositif NFC (102, 500) selon la revendication 1, dans lequel le dispositif NFC (102, 500) est configuré en outre pour comparer un ou plusieurs des signaux de détection observés (602) à un ou plusieurs des signaux de détection (302, 552) correspondants pour détecter si le deuxième dispositif NFC (104) reste présent à l'intérieur de son champ magnétique.

14. Procédé de détection d'une présence d'un dispositif de communication en champ proche, NFC (102, 500), comprenant les étapes consistant à :
a) moduler, par un second dispositif NFC (104), un signal de détection (302, 552) sur une onde porteuse pour fournir un signal de détection modulé (554) ;
b) appliquer, par le second dispositif NFC (104), le signal de détection modulé (554) à un élément de couplage inductif pour générer un champ magnétique en vue de fournir une séquence de détection (556) ;
c) démoduler, par le second dispositif NFC (104), la séquence de détection (556) en vue de fournir un signal de détection observé (304, 602) ;
d) comparer une métrique de signal du signal de détection observé (304, 602) et une métrique de signal du signal de détection (302, 552) ou un précédent signal de détection observé (304, 602) pour déterminer un change-ment de métrique de signal ; et
e) indiquer, par le second dispositif NFC (104), le dispositif NFC (102, 500) comme étant présent à l'intérieur du champ magnétique lorsque le signal de détection observé (304, 602) est lié de façon non linéaire au signal de détection (302, 552) ou au précédent signal de détection observé (304, 602) sur la base du changement de métrique de signal déterminé.

15. Procédé selon la revendication 12, dans lequel l'étape (d) comprend les étapes consistant à :
(i) comparer une métrique de signal du signal de détection observé (304, 602) et une métrique de signal d'un précédent signal de détection (302, 552) pour déterminer un changement de métrique de signal ;
(ii) caractériser le changement de métrique de signal entre des signaux de détection (302, 552) comme étant non linéaire ou linéaire ;
(iii) indiquer le dispositif NFC (102, 500) comme étant présent à l'intérieur du champ magnétique lorsque le changement de métrique de signal est caractérisé comme étant sensiblement non linéaire ; et
(iv) indiquer le second dispositif NFC comme n'étant pas présent à l'intérieur du champ magnétique lorsque le changement de métrique de signal est caractérisé comme étant sensiblement linéaire.
